# EUROPÄISCHE PATENTSCHRIFT

(11) **EP 3 140 572 B1**
(45) Veröffentlichungstag und Bekanntmachung des Hinweises auf die Patenterteilung: **21.03.2018**
(21) Anmeldenummer: 14809330.5
(22) Anmeldetag: 01.12.2014
(51) Int. Cl.: F16J 15/34

(54) **GLEITRINGDICHTUNGSANORDNUNG MIT VERBESSERTER GASABSCHEIDUNG**
SLIP RING SEAL ASSEMBLY HAVING IMPROVED GAS SEPARATION
ENSEMBLE DE GARNITURE D'ÉTANCHÉITÉ À BAGUES DE GLISSEMENT AYANT UNE SÉPARATION DE GAZ AMÉLIORÉE

(30) Priorität: 09.05.2014 DE 102014208738
(43) Veröffentlichungstag der Anmeldung: 15.03.2017
(73) Patentinhaber: EagleBurgmann Germany GmbH & Co. KG, 82515 Wolfratshausen (DE)
(72) Erfinder: BERGER, Wolfgang, 83671 Benediktbeuern (DE); RIEDL, Michael, 82335 Berg (DE); POCHMANN, Ernst, 82431 Kochel am See (DE); GERG, Josef, 83674 Gaißach (DE)
(74) Vertreter: Hoefer & Partner Patentanwälte mbB
(86) Internationale Anmeldenummer: PCT/EP2014/076118
(87) Internationale Veröffentlichungsnummer: WO 2015/169407

(56) Entgegenhaltungen:
- EP-A1- 2 172 679
- WO-A1-2011/061142
- WO-A1-2013/083437
- GB-A- 812 046

## Beschreibung

Die vorliegende Erfindung betrifft eine Gleitringdichtungsanordnung mit einer verbesserten Gasabscheidung, um ein Trockenlaufen einer Gleitringdichtung zu vermeiden.

Gleitringdichtungsanordnungen sind aus dem Stand der Technik in unterschiedlichen Ausgestaltungen bekannt. Bei einer sogenannten Tandem-Bauweise, bei der zwei Gleitringdichtungen in Reihe nacheinander geschaltet sind, wird die atmosphärenseitige Gleitringdichtung üblicherweise durch ein in einem Fluidraum zwischen den beiden Gleitringdichtungen angeordnetes Quenchmedium geschmiert. Die produktseitige Gleitringdichtung wird üblicherweise durch das Produkt selbst geschmiert. Hierbei ist ein Druck an der Produktseite größer als im Fluidraum zwischen den beiden Gleitringdichtungen, so dass eine Leckage, ausgehend vom Produkt, über den produktseitigen Dichtspalt in den Fluidraum auftritt. Wenn das abzudichtende Produkt ein Gas ist, kann somit Gas in den Fluidraum eintreten. Wenn das abzudichtende Produkt eine Flüssigkeit ist, kann diese Flüssigkeit aufgrund des Druckabfalls über den produktseitigen Dichtspalt verdampfen und ebenfalls zur Gasanreicherung im Fluidraum führen. Diese Leckage wird noch verstärkt, wenn an den Gleitflächen der produktseitigen Gleitringdichtung Nuten oder dgl. vorgesehen sind oder diese eine Diamantbeschichtung aufweist, bei denen die Gleitringdichtung mit einem etwas größeren Dichtspalt betrieben werden muss. Durch die Anreicherung von Gas im Quenchmedium im Fluidraum kann es vorkommen, dass ab einer gewissen Volumenkonzentration des Gases die Ausbildung von geschlossenen Gasringen auftritt. Hierbei kann es zu einer mangelhaften Schmierung der atmosphärenseitigen Gleitringdichtung kommen, wobei insbesondere die Gefahr einer Überhitzung und eines Trockenlaufs auftreten kann. Die hohe Gaskonzentration kann ferner auch die Funktion einer Pumpeinrichtung innerhalb des Fluidraums, z.B. eines Pumprings oder dgl., beeinträchtigen, so dass keine Umwälzung des Quenchmediums mehr im Fluidraum erfolgt. Hierdurch steigt insbesondere die Temperatur des Quenchmediums, was ebenfalls zu einem Dichtungsversagen, insbesondere der atmosphärenseitigen Gleitringdichtung führen kann. Ferner ist aus der GB 812,046 B eine Gleitringdichtungsanordnung mit den Merkmalen des Oberbegriffs des Anspruchs 1 bekannt.

Es ist daher Aufgabe der vorliegenden Erfindung, eine Gleitringdichtungsanordnung mit zwei Gleitringdichtungen bereitzustellen, welche bei einfachem Aufbau und einfacher, kostengünstiger Herstellbarkeit eine sichere Abführung von Gas aus einem Fluidraum zwischen den beiden Gleitringdichtungen ermöglicht.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruches 1 weist demgegenüber den Vorteil auf, dass ein in einen Fluidraum zwischen einer ersten und einer zweiten Gleitringdichtung befindliches Gas sicher abgeführt werden kann, so dass insbesondere die Bildung von Gasringen im Fluidraum vermieden werden kann. Dadurch kann bei allen Betriebspunkten die Gleitringdichtungsanordnung ausreichend gekühlt werden und ferner eine ausreichende Abdichtung gewährleisten. Weiterhin kann eine Lebensdauer der Gleitringdichtungsanordnung signifikant vergrößert werden. Dies wird erfindungsgemäß dadurch erreicht, dass neben einem Quenchaustritt, über welchen ein Quenchmedium aus dem Fluidraum abführbar ist, zusätzlich noch ein Gasaustritt vorgesehen ist, über welchen ein im Fluidraum befindliches Gas abführbar ist. Weiterhin ist eine Drosseleinrichtung vorgesehen, welche im Fluidraum zwischen den beiden Gleitringdichtungen angeordnet ist. Die Drosseleinrichtung unterteilt den Fluidraum in einen produktseitigen Fluidraumbereich und einen atmosphärenseitigen Fluidraumbereich. Der Gasaustritt ist dabei am produktseitigen Fluidraumbereich angeordnet. Der Quenchaustritt ist am atmosphärenseitigen Fluidraumbereich angeordnet. Durch diese Anordnung kann Gas, welches über die erste Gleitringdichtung in den Fluidraum eintritt, unmittelbar über dem zusätzlichen Gasaustritt abgeführt werden, ohne dass die Gefahr besteht, dass dieses Gas bis zur zweiten Gleitringdichtung gelangt. Somit kann die zweite Gleitringdichtung immer ausreichend mit Quenchmedium versorgt werden und die notwendigen Schmierbedingungen der zweiten Gleitringdichtungen stets erfüllt werden. Weiter umfasst die Drosseleinrichtung eine rotierende Ringscheibe, welche mit dem rotierenden Bauteil, insbesondere einer Welle oder dgl., rotiert. Die mit der rotierenden Ringscheibe versehene Drosseleinrichtung stellt eine zusätzliche Barriere für das Gas dar, so dass ein sicheres Abführen des eingedrungenen Gases über den Gasaustritt ermöglicht wird. Weiter ist eine Mündungsöffnung des Gasaustritts am Fluidraum auf einem ersten Durchmesser angeordnet, welcher kleiner ist, als ein maximaler Außendurchmesser der Ringscheibe der Drosseleinrichtung. Dadurch wird ein noch sichereres Abführen des Gases erreicht, da aufgrund der Fliehkräfte das Gas tendenziell an inneren Umfangsbereichen des Fluidraums vorhanden ist und das flüssige Quenchmedium aufgrund der Fliehkräfte an äußeren Umfangsbereichen des Fluidraums angeordnet ist.

Weiter bevorzugt umfasst die Ringscheibe Fördereinrichtungen. Die Fördereinrichtungen an der Ringscheibe sind dabei eingerichtet, das Quenchmedium in Richtung zur ersten Gleitringdichtung zu fördern, so dass eine Gegenströmung durch Gas deutlich erschwert wird. Die Fördereinrichtungen sind beispielsweise Schaufeln oder Flügel. Weiter bevorzugt sind die Fördereinrichtungen an einer zur zweiten Gleitringdichtung gerichteten Seite der Ringscheibe angeordnet, um eine verstärkte Förderung von Quenchmedium in Richtung zur ersten Gleitringdichtung in den produktseitigen Fluidraumbereich zu ermöglichen.

Um eine möglichst gute Abdichtung und Drosselwirkung der Drosseleinrichtung zu erreichen, umfasst die Drosseleinrichtung bevorzugt ein Labyrinth mit mehreren Fluidumleitungsbereichen.

Weiter bevorzugt ist ein minimaler Querschnitt des Fluidraums am Gasaustritt vorgesehen. Hierdurch kann sichergestellt werden, dass das Gas unmittelbar in den Gasaustritt abgeführt wird. Der minimale Querschnitt ist weiter bevorzugt am kleinsten Innendurchmesser des Fluidraums vorgesehen.

Gemäß einer weiteren bevorzugten Ausgestaltung der vorliegenden Erfindung umfasst die Quenchversorgungseinheit einen Ausgasungsbehälter. Dabei ist der Gasaustritt bevorzugt mit dem Ausgasungsbehälter verbunden. Somit kann Gas, welches aus dem Fluidraum abgeführt wird, am Ausgasungsbehälter abgeschieden werden, um beispielsweise über ein Ventil, Ausgasungsbehälter oder dgl. an die Atmosphäre oder eine Fackel abgegeben werden.

Um eine möglichst strömungsgünstige Überleitung des Gases aus dem Fluidraum in den Gasaustritt zu erreichen, ist der Gasaustritt in Rotationsrichtung des rotierten Bauteils zu einer Radialrichtung der Gleitringdichtungsanordnung geneigt. Hierbei kann am Innenumfang des Gehäusebauteils, in welchem der Gasaustritt vorgesehen ist, ferner zusätzlich noch eine in Umfangsrichtung verlaufende, sich langsam vertiefende

Nut, welche zum Gasaustritt führt, vorgesehen sein, um eine noch bessere Strömung des Gases in dem Gasaustritt zu erreichen.

Weiter bevorzugt ist die Quenchversorgungseinheit als Kreislauf ausgebildet und umfasst einen Zulauf zum Fluidraum, welcher am atmosphärenseitigen Fluidraumbereich mündet.

Gemäß einer weiteren bevorzugten Ausgestaltung der vorliegenden Erfindung ist ferner eine Pumpeinrichtung vorgesehen, welche zur Förderung des Quenchmediums im Fluidraum eingerichtet ist, wobei die Pumpeinrichtung zwischen der Drosseleinrichtung und der zweiten Gleitringdichtung im atmosphärenseitigen Fluidraumbereich angeordnet ist. Erfindungsgemäß wird unter einer Pumpeinrichtung jede Fördereinrichtung verstanden, welche durch Rotation eine Förderung des Quenchmediums im Fluidraum ermöglicht, beispielsweise in Form von Fördergewinden oder Pumpringen oder dgl.

Weiter bevorzugt umfasst wenigstens einer der Gleitringe, insbesondere einer der Gleitringe der produktseitigen Gleitringdichtung eine Diamantbeschichtung. Da bei Gleitringdichtungen mit Diamantbeschichtungen ein Dichtspalt im Vergleich zu anderen Gleitringdichtungen tendenziell etwas größer ist, tritt bei diamantbeschichteten Gleitringen eine erhöhte Leckage von der Produktseite in den Fluidraum auf, so dass die vorliegende Erfindung hier besonders geeignet ist, um zusätzlich im Fluidraum befindliches Gas abzuführen.

Nachfolgend wird unter Bezugnahme auf die begleitende Zeichnung ein Ausführungsbeispiel im Detail beschrieben. In der Zeichnung ist:

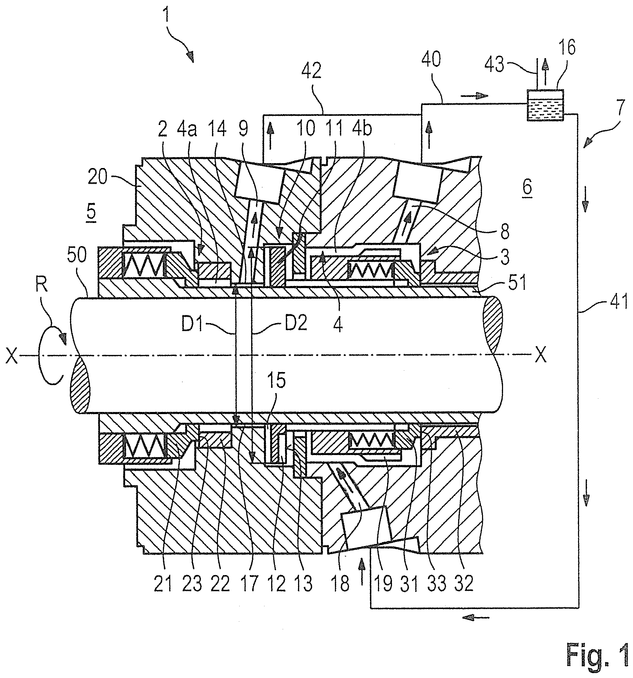

- Fig. 1: eine schematische, teilweise geschnittene Ansicht einer Gleitringdichtungsanordnung gemäß einem bevorzugten Ausführungsbeispiel der Erfindung.

Wie aus Fig. 1 ersichtlich ist, umfasst die Gleitringdichtungsanordnung 1 eine erste Gleitringdichtung 2 und eine zweite Gleitringdichtung 3. In Axialrichtung X-X ist dabei zwischen den beiden Gleitringdichtungen 2, 3 ein Fluidraum 4 ausgebildet.

Die Gleitringdichtungsanordnung 1 umfasst somit eine erste Gleitringdichtung 2 mit einem ersten rotierenden Gleitring 21 und einem ersten stationären Gleitring 22, welche zwischen sich einen ersten Dichtspalt 23 definieren. Ferner umfasst die Gleitringdichtungsanordnung 1 eine zweite Gleitringdichtung 3 mit einem zweiten rotierenden Gleitring 31, einem zweiten stationären Gleitring 32 und einem zwischen den beiden Gleitringen ausgebildeten Dichtspalt 33.

Die Gleitringdichtungsanordnung 1 ist somit in sogenannter Tandem-Bauweise vorgesehen, wobei zwei Gleitringdichtungen 2, 3 in Reihe geschaltet sind, um eine Produktseite 5 von einer Atmosphärenseite 6 abzudichten.

Im Fluidraum 4 ist ein flüssiges Quenchmedium befindlich, welches durch eine Quenchversorgungseinheit 7 bereitgestellt wird.

Die Quenchversorgungseinheit 7 umfasst einen Quenchaustritt 8, welcher über eine Abfuhrleitung 40 mit einem Ausgasungsbehälter 16 verbunden ist. Am Ausgasungsbehälter 16 ist ein Gasauslass 43 vorgesehen, um abgeführtes Gas aus dem Ausgasungsbehälter abzuscheiden. Der Ausgasungsbehälter 16 ist ferner über eine Zuleitung 41 und einem Zulauf 18 für das Quenchmedium mit dem Fluidraum 4 verbunden.

Zur Förderung des Quenchmediums ist dabei im Fluidraum 4 ein Pumpring 19 vorgesehen. Alternativ oder zusätzlich kann auch in einem Leitungsabschnitt der Quenchversorgungseinheit eine Pumpe angeordnet sein.

Wie aus Fig. 1 ersichtlich ist, können die rotierenden Gleitringe durch Vorspannelemente in Axialrichtung X-X vorgespannt werden.

Erfindungsgemäß ist nun ein zusätzlicher Gasaustritt 9 und eine Drosseleinrichtung 10 vorgesehen. Die Drosseleinrichtung unterteilt den Fluidraum in einen produktseitigen Fluidraumbereich und einen atmosphärenseitigen Fluidraumbereich. Wie aus Fig. 1 ersichtlich ist, ist der Gasaustritt 9 in Axialrichtung X-X am produktseitigen Fluidraumbereich 4a zwischen der Drosseleinrichtung 10 und der ersten Gleitringdichtung 2 angeordnet. Der Quenchaustritt 8 ist am atmosphärenseitigen Fluidraumbereich 4b dabei zwischen der Drosseleinrichtung 10 und der zweiten Gleitringdichtung 3 angeordnet.

Der Gasaustritt 9 ist in einem Gehäuse 20 oder dgl. vorgesehen.

Somit kann Gas, welches im Betrieb über den ersten Dichtspalt 23 der ersten Gleitringdichtung 2, welche mit dem Produkt aus der Produktseite 5 geschmiert wird, durch den relativ nahe an der ersten Gleitringdichtung 2 angeordneten Gasaustritt 9 abgeführt werden. Hierbei verhindert die Drosseleinrichtung 10, dass Gas, welches über den ersten Dichtspalt 23 in den Fluidraum 4 eingetreten ist, weiter in Richtung zur zweiten Gleitringdichtung 3 geführt wird.

Der Gasaustritt 9 ist über eine Verbindungsleitung 42 mit der Abfuhrleitung 40 des Quenchaustritts 8 verbunden. Dadurch kann das über den Gasaustritt 9 abgeführte Gas in den Abfuhrleitung 40 und von dort in den Ausgasungsbehälter 16 geführt werden. Es sei angemerkt, dass es auch möglich ist, dass der Gasaustritt 9 direkt zur Atmosphäre führt oder ein zusätzlicher zweiter Ausgasungsbehälter vorgesehen ist, in welchen die Verbindungsleitung 42 des Gasaustritts 9 führt, um das Gas abzuscheiden.

Wie aus Fig. 1 ersichtlich ist, ist die Drosseleinrichtung 10 in Form eines Labyrinths 15 mit mehreren Fluidumleitungen ausgebildet. Die Drosseleinrichtung 10 umfasst ferner eine Ringscheibe 11, welche gemeinsam mit dem rotierenden Bauteil, welches im Ausführungsbeispiel eine Welle 50 mit einer Wellenhülse 51 ist, rotiert.

Die Ringscheibe 11 umfasst ferner eine Vielzahl von Fördereinrichtungen 12, welche an einer zur zweiten Gleitringdichtung 3 gerichteten Seite 13 der Ringscheibe angeordnet sind. Die Fördereinrichtungen 12 können beispielsweise Schaufeln oder Flügel oder dgl. sein. Die Fördereinrichtungen 12 fördern dabei flüssiges Quenchmedium vom atmosphärenseitigen Fluidraum 4b des Fluidraums 4 in Richtung zum produktseitigen Fluidraum 4a im Fluidraum 4. Somit stellen die Fördereinrichtungen der rotierenden Ringscheibe 11 eine zusätzliche Gegenströmung gegen das Gas bereit, welches dann sicher über den Gasaustritt 9 aus dem Fluidraum 4 sicher entfernt werden kann.

Wie weiter aus Fig. 1 ersichtlich ist, ist eine Mündungsöffnung 14 des Gasaustritts 9 an einem ersten Durchmesser D1 vorgesehen, welcher kleiner als ein zweiter Durchmesser D2 ist. Der zweite Durchmesser D2 ist dabei ein maximaler Außendurchmesser der Ringscheibe 11.

Weiterhin ist die Mündungsöffnung 14 des Gasaustritts 9 an einem minimalen Querschnitt 17 des Fluidraums angeordnet. Wie aus Fig. 1 ersichtlich ist, ist der minimale Querschnitt 17 unmittelbar innerhalb des Gasaustritts 9 vorgesehen, so dass Gas, welches sich aufgrund der Rotation und der Fliehkräfte tendenziell am inneren Umfangsbereich des Fluidraums sammelt und die verstärkte Strömung am minimalen Querschnitt 17 mitgerissen wird und sicher in den Gasaustritt 9 abgeführt werden kann.

Um eine besonders einfache Einführung des Gases in den Gasaustritt 9 zu erreichen, ist der Gasaustritt 9 vorzugsweise in Rotationsrichtung R vorzugsweise geneigt zur Radialrichtung der Gleitringdichtungsanordnung, was im Schnitt von Fig. 1 nicht gezeigt ist. Der Gasaustritt 9 verläuft ausgehend von der Mündungsöffnung 14 dann nicht in radialer Richtung der Welle 50, sondern in einem Winkel hierzu geneigt in Rotationsrichtung, wodurch die Einströmung des Gases in den Gasaustritt deutlich verbessert wird. Ferner kann im Gehäuse 20 noch eine in Umfangsrichtung am inneren Umfang des Gehäuses 20 verlaufende Nut vorgesehen werden, welche sich bevorzugt kontinuierlich in Richtung zur Mündungsöffnung 14 vertieft, um eine zusätzliche Führung für das Gas in Richtung zum Gasaustritt 9 bereitzustellen.

In Fig. 1 zeigen die Pfeile dabei jeweils die Strömungsrichtungen des Quenchmediums durch die Quenchversorgungseinheit 7 sowie des über den Gasaustritt 9 abgeführten Gases.

Es sei angemerkt, dass das Produkt an der Produktseite 5 sowohl ein flüssiges, als auch ein gasförmiges Produkt sein kann. Bei gasförmigen Produkten ist die erste Gleitringdichtung 2 als gasgeschmierte Gleitringdichtung, geschmiert durch das gasförmige Produkt, ausgebildet. Hierdurch kann zusätzliches Gas in den Fluidraum 4 gelangen, weiches durch die erfindungsgemäßen Maßnahmen sicher in den Gasaustritt 9 abgeführt werden kann. Wenn das produktseitige Medium eine Flüssigkeit ist, kann dieses aufgrund der Druckdifferenz zwischen der Produktseite und dem Fluidraum 4 im ersten Dichtspalt 23 verdampfen, wodurch unerwünschtes Gas im Fluidraum 4 entstehen kann, welches ebenfalls durch die erfindungsgemäßen Maßnahmen über den Gasaustritt 9 abgeführt werden kann.

Insbesondere ermöglicht die vorliegende Erfindung die Verwendung von diamantbeschichteten Gleitringen an der produktseitigen ersten Gleitringdichtung 2. Hierdurch kann die Gleitringdichtung 2 durch die diamantbeschichteten Gleitringe eine hohe Lebensdauer aufweisen und die zweite Gleitringdichtung 3 kann mit beliebigen Gleitflächen ausgebildet sein und ebenfalls eine signifikant höhere Lebensdauer aufweisen, als im Stand der Technik, da keine gasbedingten Schäden an der zweiten Gleitringdichtung 3 auftreten können.

### Bezugszeichenliste

- 1: Gleitringdichtungsanordnung
- 2: erste Gleitringdichtung
- 3: zweite Gleitringdichtung
- 4: Fluidraum
- 4a: produktseitiger Fluidraumbereich
- 4b: atmosphärenseitiger Fluidraumbereich
- 5: Produktseite
- 6: Atmosphärenseite
- 7: Quenchversorgungseinheit
- 8: Quenchaustritt
- 9: Gasaustritt
- 10: Drosseleinrichtung
- 11: Ringscheibe
- 12: Fördereinrichtung
- 13: atmosphärenseitige Seite der Ringscheibe
- 14: Mündungsöffnung des Gasaustritts
- 15: Labyrinth
- 16: Ausgasungsbehälter
- 17: minimaler Querschnitt des Fluidraums
- 18: Zulauf des Quenchmediums
- 19: Pumpring
- 20: Gehäuse
- 21: erster rotierender Gleitring
- 22: erster stationärer Gleitring
- 23: erster Dichtspalt
- 31: zweiter rotierender Gleitring
- 32: zweiter stationärer Gleitring
- 33: zweiter Dichtspalt
- 40: Abfuhrleitung
- 41: Zuleitung
- 42: Verbindungsleitung
- 43: Auslass
- 50: Welle
- 51: Wellenhülse

## Patentansprüche

1. Gleitringdichtungsanordnung (1) zur Abdichtung einer Produktseite (5) an einem rotierenden Bauteil, umfassend:
- eine erste Gleitringdichtung (2) mit einem ersten rotierenden Gleitring (21) und einem ersten stationären Gleitring (22), welche zwischen sich einen ersten Dichtspalt (23) definieren,
- eine zweite Gleitringdichtung (3) mit einem zweiten rotierenden Gleitring (31) und einem zweiten stationären Gleitring (32), welche zwischen sich einen zweiten Dichtspalt (33) definieren,
- einen Fluidraum (4), welcher durch die erste und zweite Gleitringdichtung (2, 3) begrenzt ist,
- wobei die erste Gleitringdichtung (2) mit einem Produktmedium der Produktseite (5) geschmiert ist und wobei die zweite Gleitringdichtung (3) mit einem flüssigen Quenchmedium einer Quenchversorgungseinheit (7) geschmiert ist, wobei das Quenchmedium im Fluidraum (4) befindlich ist,
- einen Quenchaustritt (8), über welchen Quenchmedium aus dem Fluidraum (4) abführbar ist, und
- eine Drosseleinrichtung (10), welche im Fluidraum (4) zwischen der ersten Gleitringdichtung (2) und der zweiten Gleitringdichtung (3) angeordnet ist und den Fluidraum (4) in einen produktseitigen Fluidraumbereich (4a) und einen atmosphärenseitigen Fluidraum (4b) unterteilt,
**dadurch gekennzeichnet, dass**
- ein Gasaustritt (9) vorgesehen ist, über welchen ein im Fluidraum befindliches Gas abführbar ist,
- wobei der Gasaustritt (9) am produktseitigen Fluidraumbereich (4a) angeordnet ist und der Quenchaustritt (8) am atmosphärenseitigen Fluidraumbereich (4b) angeordnet ist, und
- die Drosseleinrichtung (10) eine rotierende Ringscheibe (11) umfasst, wobei eine Mündungsöffnung (14) des Gasaustritts (9) zum Fluidraum (4) auf einem ersten Durchmesser (D1) angeordnet ist, welcher kleiner ist als ein maximaler Außendurchmesser (D2) der Ringscheibe (11).

2. Gleitringdichtungsanordnung nach Anspruch 1, **dadurch gekennzeichnet, dass** an der Ringscheibe (11) Fördereinrichtungen (12) angeordnet sind.

3. Gleitringdichtungsanordnung nach Anspruch 2, **dadurch gekennzeichnet, dass** die Fördereinrichtungen (12) an einer zur zweiten Gleitringdichtung (3) gerichteten Seite (13) der Ringscheibe (11) angeordnet sind.

4. Gleitringdichtungsanordnung nach einem der vorhergehenden Ansprüche, **dadurch gekennzeichnet, dass** die Drosseleinrichtung (10) ein Labyrinth (15) mit mehreren Fluidumleitungsbereichen umfasst.

5. Gleitringdichtungsanordnung nach einem der vorhergehenden Ansprüche, **dadurch gekennzeichnet, dass** ein minimaler Querschnitt (17) des Fluidraums (4) am Gasaustritt (9) angeordnet ist.

6. Gleitringdichtungsanordnung nach einem der vorhergehenden Ansprüche, **dadurch gekennzeichnet, dass** die Quenchversorgungseinheit (7) einen Ausgasungsbehälter (16) umfasst.

7. Gleitringdichtungsanordnung nach Anspruch 6, **dadurch gekennzeichnet, dass** der Gasaustritt (9) mit dem Ausgasungsbehälter (16) verbunden ist.

8. Gleitringdichtungsanordnung nach einem der vorhergehenden Ansprüche, **dadurch gekennzeichnet, dass** der Gasaustritt (9) in Rotationsrichtung (R) zu einer Radialrichtung der Gleitringdichtungsanordnung geneigt ist.

9. Gleitringdichtungsanordnung nach einem der vorhergehenden Ansprüche, **dadurch gekennzeichnet, dass** ein Zulauf (18) des Quenchmediums zum Fluidraum (4) am atmosphärenseitigen Fluidraumbereich (4b) angeordnet ist.

10. Gleitringdichtungsanordnung nach einem der vorhergehenden Ansprüche, ferner umfassend eine Pumpeinrichtung (19), welche im atmosphärenseitigen Fluidraumbereich (4b) angeordnet ist, um Quenchmedium zu fördern.

11. Gleitringdichtungsanordnung nach einem der vorhergehenden Ansprüche, **dadurch gekennzeichnet, dass** die erste Gleitringdichtung (2) und/oder die zweite Gleitringdichtung (3) wenigstens einen Gleitring mit Diamantbeschichtung umfasst.

## Claims

1. Mechanical seal arrangement (1) for sealing a product side (5) at a rotating component, comprising:
- a first mechanical seal (2) with a first rotating slide ring (21) and a first stationary slide ring (22) which define a first sealing gap (23) between them,
- a second mechanical seal (3) with a second rotating slide ring (31) and a second stationary slide ring (32) which define a second sealing gap (33) between them,
- a fluid space (4), which is limited by the first and second mechanical seal (2, 3),
- wherein the first mechanical seal (2) is lubricated with a product medium of the product side (5) and wherein the second mechanical seal (3) is lubricated with a liquid quench medium of a quench supply unit (7), wherein the quench medium is located in the fluid space (4),
- a quench outlet (8) via which the quench medium may be discharged from the fluid space (4), and
- a throttle device (10), which is arranged in the fluid space (4) between the first mechanical seal (2) and the second mechanical seal (3) and which divides the fluid space (4) in a product-side fluid space region (4a) and an atmosphere-side fluid space (4b),
**characterized in that**
- a gas outlet (9) is provided via which a gas located in the fluid space may be discharged,
- wherein the gas outlet (9) is arranged at the product-side fluid space region (4a) and the quench outlet (8) is arranged at the atmosphere-side fluid space region (4b), and
- the throttle device (10) comprises a rotating ring disk (11), wherein an orifice (14) of the gas outlet (9) to the fluid space (4) is arranged on a first diameter (D1), which is smaller than a maximum outer diameter (D2) of the ring disk (11).

2. Mechanical seal arrangement according to claim 1, **characterized in that** conveying devices (12) are arranged at the ring disk (11).

3. Mechanical seal arrangement according to claim 2, **characterized in that** the conveying devices (12) are arranged at a side (13) of the ring disk (11) facing the second mechanical seal (3).

4. Mechanical seal arrangement according to any one of the preceding claims, **characterized in that** the throttle device (10) comprises a labyrinth (15) with several fluid deviation regions.

5. Mechanical seal arrangement according to any one of the preceding claims, **characterized in that** a minimum cross-section (17) of the fluid space (4) is arranged at the gas outlet (9).

6. Mechanical seal arrangement according to any one of the preceding claims, **characterized in that** the quench supply unit (7) comprises a degassing container (16).

7. Mechanical seal arrangement according to claim 6, **characterized in that** the gas outlet (9) is connected to the degassing container (16).

8. Mechanical seal arrangement according to any one of the preceding claims, **characterized in that** the gas outlet (9) is inclined in rotational direction (R) towards a radial direction of the mechanical seal arrangement.

9. Mechanical seal arrangement according to any one of the preceding claims, **characterized in that** an inlet (18) of the quench medium to the fluid space (4) is arranged at the atmosphere-side fluid space region (4b).

10. Mechanical seal arrangement according to any one of the preceding claims, further comprising a pump device (19) which is arranged in the atmosphere-side fluid space region (4b) for conveying quench medium.

11. Mechanical seal arrangement according to any one of the preceding claims, **characterized in that** the first mechanical seal (2) and/or the second mechanical seal (3) comprises at least one slide ring with diamond coating.

## Revendications

1. Ensemble de garniture d'étanchéité à bagues de glissement (1) pour rendre étanche un côté produit (5) sur un composant rotatif, comprenant :
- une première garniture d'étanchéité à bagues de glissement (2) avec une première bague de glissement rotative (21) et une première bague de glissement stationnaire (22) qui définissent entre elles une première fente étanche,
- une seconde garniture d'étanchéité à bagues de glissement (3) avec une seconde bague de glissement rotative (31) et une seconde bague de glissement stationnaire (32) qui définissent entre elles une seconde fente étanche (33),
- un espace de fluide (4) qui est délimité par les première et seconde garnitures d'étanchéité à bagues de glissement (2, 3),
- dans lequel la première garniture d'étanchéité à bagues de glissement (2) est lubrifiée avec un fluide de produit du côté produit (5) et dans lequel la seconde garniture d'étanchéité à bagues de glissement (3) est lubrifiée avec un produit de trempage liquide d'une unité d'alimentation de trempage (7), dans lequel le produit de trempage se trouve dans l'espace de fluide (4),
- une sortie de trempage (8) par laquelle un fluide de trempage peut être évacué de l'espace de fluide (4), et
- un dispositif d'étranglement (10) qui est agencé dans l'espace de fluide (4) entre la première garniture d'étanchéité à bagues de glissement (2) et la seconde garniture d'étanchéité à bagues de glissement (3) et divise l'espace de fluide (4) en une zone d'espace de fluide (4a) côté produit et un espace de fluide (4b) côté atmosphère,
**caractérisé en ce que**
- une sortie de gaz (9) est prévue, par le biais de laquelle un gaz se trouvant dans l'espace de fluide peut être évacué,
- dans lequel la sortie de gaz (9) est agencée sur la zone d'espace de fluide (4a) côté produit et la sortie de trempage (8) est agencée sur la zone d'espace de fluide (4b) côté atmosphère, et
- le dispositif d'étranglement (10) comporte un disque annulaire (11) rotatif, dans lequel une ouverture d'embouchure (14) de la sortie de gaz (9) vers l'espace de fluide (4) est agencée sur un premier diamètre (D1) qui est inférieur à un diamètre extérieur maximal (D2) du disque annulaire (11).

2. Ensemble de garniture d'étanchéité à bagues de glissement selon la revendication 1, **caractérisé en ce que** des dispositifs de transport (12) sont agencés sur le disque annulaire (11).

3. Ensemble de garniture d'étanchéité à bagues de glissement selon la revendication 2, **caractérisé en ce que** les dispositifs de transport (12) sont agencés sur un côté (13) dirigé vers la seconde garniture d'étanchéité à bagues de glissement (3) du disque annulaire (11).

4. Ensemble de garniture d'étanchéité à bagues de glissement selon l'une quelconque des revendications précédentes, **caractérisé en ce que** le dispositif d'étranglement (10) comporte un labyrinthe (15) avec plusieurs zones de dérivation de fluide.

5. Ensemble de garniture d'étanchéité à bagues de glissement selon l'une quelconque des revendications précédentes, **caractérisé en ce qu'**une section transversale minimale (17) de l'espace de fluide (4) est agencée sur la sortie de gaz (9).

6. Ensemble de garniture d'étanchéité à bagues de glissement selon l'une quelconque des revendications précédentes, **caractérisé en ce que** l'unité d'alimentation de trempage (7) comporte un récipient de dégazage (16).

7. Ensemble de garniture d'étanchéité à bagues de glissement selon la revendication 6, **caractérisé en ce que** la sortie de gaz (9) est raccordée au récipient de dégazage (16).

8. Ensemble de garniture d'étanchéité à bagues de glissement selon l'une quelconque des revendications précédentes, **caractérisé en ce que** la sortie de gaz (9) est inclinée dans le sens de rotation (R) vers un sens radial de l'ensemble de garniture d'étanchéité à bagues de glissement.

9. Ensemble de garniture d'étanchéité à bagues de glissement selon l'une quelconque des revendications précédentes, **caractérisé en ce qu'**une arrivée (18) du produit de trempage à l'espace de fluide (4) est agencée sur la zone d'espace de fluide (4b) côté atmosphère.

10. Ensemble de garniture d'étanchéité à bagues de glissement selon l'une quelconque des revendications précédentes, comprenant de plus un dispositif de pompage (19) qui est agencé dans la zone d'espace de fluide (4b) côté atmosphère afin de transporter du produit de trempage.

11. Ensemble de garniture d'étanchéité à bagues de glissement selon l'une quelconque des revendications précédentes, **caractérisé en ce que** la première garniture d'étanchéité à bagues de glissement (2) et/ou la seconde garniture d'étanchéité à bagues de glissement (3) comporte au moins une bague de glissement avec un revêtement diamant.
